# EUROPEAN PATENT APPLICATION

(11) **EP 2 420 955 A2**
(43) Date of publication of application: **22.02.2012**
(21) Application number: 11171256.8
(22) Date of filing: 24.06.2011
(51) Int. Cl.: G06K 9/22, G06F 17/30

(54) **Terminal device and method for augmented reality**

(30) Priority: 20.08.2010 KR 20100080780
(71) Applicant: Pantech Co., Ltd., Seoul 121-270 (KR)
(72) Inventor: Kim, Han-Young, 121- 270 Seoul (KR); Jin, Yong-Geun, 121-270 Seoul (KR)
(74) Representative: Jordan, Volker Otto Wilhelm

(57) **Abstract**

A terminal device and method for augmented reality (AR) is disclosed herein. The terminal device including: a communication unit to communicate with an object server, the object server storing images of a plurality of objects and property information corresponding to levels of each object; an object recognition unit to recognize an object contained in the image; and a control unit to receive property information from the object server corresponding to a pixel value of the recognized object from and to combine the received property information and the recognized object.

## Description

### CROSS-REFERENCE TO RELATED APPLICATION(S)

This application claims priority from and the benefit under 35 U.S.C. §119(a) of Korean Patent Application No. 10-2010-0080780, filed on August 20, 2010, in the Korean Intellectual Property Office, which is incorporated by reference for all purposes as if fully set forth herein.

### BACKGROUND

FIELD

The following description relates to augmented reality (AR), and more particularly to, a terminal device and method which provides property information of an object displayed.

DISCUSSION OF THE BACKGROUND

Augmented reality (AR) is related to virtual reality, by providing an image that is generated by combining a view of a physical real-world with a virtual world and that contains supplementary information. AR is similar to virtual reality in some way, but differs from virtual reality in other ways. Virtual reality provides users with a virtual space and virtual objects, whereas AR provides a view of reality which is augmented by virtual objects, thereby providing supplementary information which may be difficult to obtain in reality. Unlike virtual reality based on a completely virtual world, AR provides a better sense of reality to users since AR is a combination of virtual elements and the physical real-world environment. Recently, various AR services have become available due to the computing performance of mobile devices, such as mobile phones, personal digital assistants (PDAs), and ultra mobile personal computers becoming enhanced and wireless network devices becoming more developed.
For example, if an image of an object from a physical real environment is captured by a camera of a mobile phone, AR may be an image produced by combining the object with virtually generated property information related to the object, and the AR may be output to a mobile phone. Such an AR service displays one piece of property information with respect to one object, or displays an object along with corresponding property information if an image of the object is displayed within a certain portion of the mobile phone.

### SUMMARY

The following description relates to a terminal device and method for providing property information according to various embodiment contained herein.

An exemplary embodiment provides for a terminal device to provide an augmented reality (AR) of an image, the terminal device including: a communication unit to communicate with an object server, the object server storing images of a plurality of objects and property information corresponding to levels of each object; an object recognition unit to recognize an object contained in the image; and a control unit to receive property information from the object server corresponding to a pixel value of the recognized object from and to combine the received property information and the recognized object.

Another exemplary embodiment provides for a method of displaying property information of an object of an inputted image, the method including recognizing the object in the inputted image; determining a level according to a pixel value of the recognized object; receiving property information corresponding to the determined level from an object server; combining the received property information and the recognized object; and displaying the combined result.

Another exemplary embodiment provides for a terminal device that displays an image with an object and communicates with a server, the device including a determination unit to determine the location of the object based on an amount of pixels of the object; a communication unit to communicate to the server and receive information corresponding to the location of the object; a display unit to display the information along with the first object.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a terminal device according to an exemplary embodiment of the present invention.

FIG. 2 is a diagram illustrating an image of a terminal device according to an exemplary embodiment of the present invention.

FIG. 3 is a flowchart displaying information based on levels according to an exemplary embodiment of the present invention.

FIG. 4 is a flowchart showing an operation of display of AR according to an exemplary embodiment of the present invention.

FIG. 5 is a flowchart illustrating determining a marker level according to an exemplary embodiment of the present invention.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art.

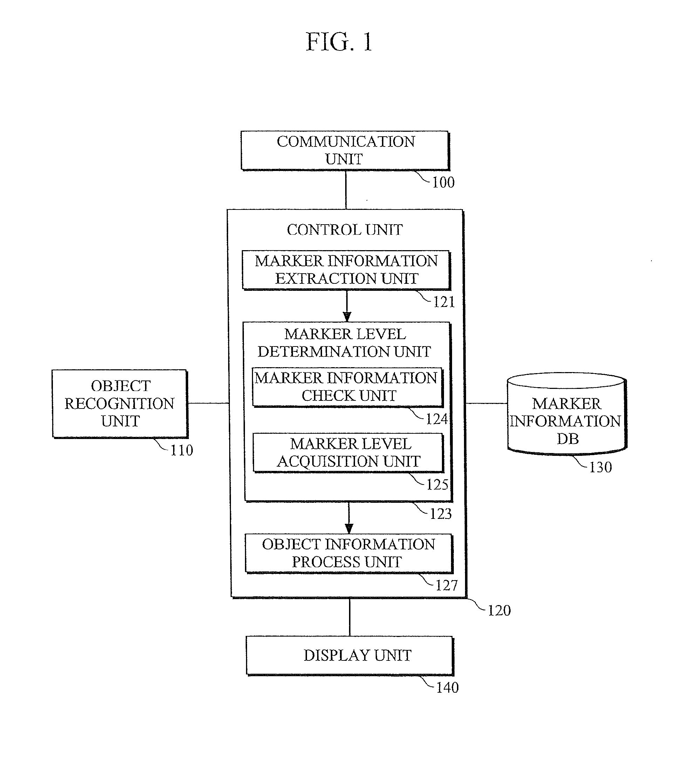

FIG. 1 is a diagram illustrating a terminal device according to an exemplary embodiment of the present invention.

As shown in FIG. 1, the terminal device may include a communication unit 100, an object recognition unit 110, a control unit 120, a marker information database 130, and a display unit 140. The communication unit 100 is provided for wireless data communication with an object server (not shown), and transmits an object displayed by the display unit 140 to the object server, and receives property information associated with the object. The object server may store images of one or more objects and property information corresponding to each object. Accordingly, the terminal device may receive the property information related to the object displayed from the object server by use of the communication unit 100.

The object recognition unit 110 recognizes an object related to an image input from a camera, such as a camera being built in the terminal device or another image capture or sourcing device. More specifically, if an image with a predefined size is input from a source, such as a camera, the object recognition unit 110 may recognize an object related to or within the image. Accordingly, the terminal device receives the property information related to the object recognized by the object recognition unit 110 from the object server through the communication unit 100. In response to this recognition of the object, the control unit 120 receives property information corresponding to the pixel value of the recognized object from the object server through the communication unit 100, and combines the received property information with the recognized object to display the combined image with the display unit 140. More specifically, as the pixel value of the image of the recognized object displayed is higher, the control unit 120 may control the property information of the object to be displayed in more detail or less detail relative to a display that has not been modified by the control unit 120.

A marker level is a value corresponding to a priority or importance of relevant marker information, the marker information corresponding to a pixel value according to the width and height of an object. The marker information DB 130 stores marker levels of marker information according to the pixel value of an object. The control unit 120 determines a marker level of an object displayed with reference to the marker information DB 130, and may control property information corresponding to the determined marker level of the object to be displayed on the screen. The control unit 120 may include a marker information extraction unit 121, a marker level determination unit 123, and an object information process unit 127. The marker information extraction unit 121 extracts marker information of the object recognized by the object recognition unit 110. In this case, the marker information is a pixel value according to the width and height of the object recognized by the object recognition unit 110. The marker information extraction unit 121 extracts marker information.

The marker level determination unit 123 determines a marker level, which is related to the marker information extracted by the marker information extraction unit 121. The marker level determination unit 123 may include a marker information check unit 124 and a marker level acquisition unit 125. The marker information check unit 124 checks whether the extracted marker information of the object is included within condition values. As described above, since the marker information is a pixel value according to the width and height of a recognized object, the marker information check unit 124 checks whether a pixel value of the object is included in the condition values.

The marker level acquisition unit 125 acquires a marker level related to the marker information of the object with reference to the marker information DB 130 if the check result of the marker information check unit 124 shows that the marker information of the object is included within the condition values. If the check result shows that the marker information of the object is not included in the condition values, the marker level acquisition unit 125 updates a marker level related to the marker information of the object.

The object information process unit 127 receives property information corresponding to the determined marker level from the object server if the marker level is determined according to the marker information of the object. After which, the object information process unit 127 combines the received property information with the object, and then outputs the combined result to the with the display unit 140. More specifically, in response to receiving the marker level of the object from the object information process unit 127, the object server, which includes images of a plurality of objects and property information corresponding to levels of each object, transmits property information corresponding to the received marker level to the terminal device. Accordingly, the object information process unit 127 receives the property information corresponding to the marker level of the object from the object server, and combines the property information with the object to display a combined result. In another example, the object information process unit 127 may process the object and the property information, of which exposure range is determined by use of the width and height of the recognized object, to be output in such a way that they can be rotated three-dimensionally.

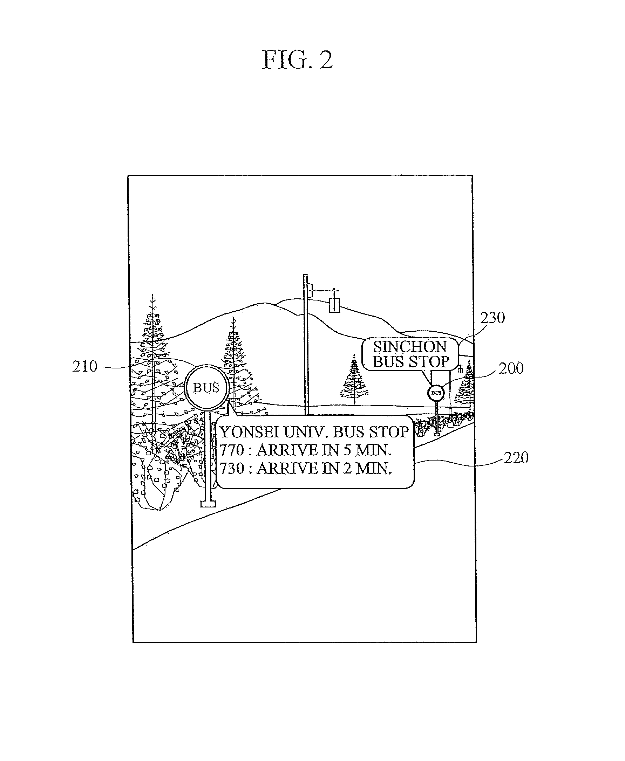

FIG. 2 is a diagram illustrating an image of the terminal device according to an exemplary embodiment of the present invention.

As shown in the example illustrated in FIG. 2, if a user sets an area of a real environment to capture using the camera of the terminal device, the camera captures the set area. The terminal device uses the object recognition unit to recognize objects of bus stop signs 200 and 210 from an image of the area captured by the camera. In response to recognizing the objects of the bus stop signs 200 and 210, the marker information extraction unit 121 of the terminal device extracts marker information of the objects of the bus stop signs 200 and 210. That is, the marker information extraction unit 121 of the terminal device extracts pixel values that are marker information of the respective objects of the bus stop signs 200 and 210. In the example, since the object of the bus stop sign 200 is placed farther from the terminal device than the object of the bus stop sign 210, a pixel value of the object of the bus stop sign 200 is smaller than a pixel value of the object of the bus stop sign 210.

If the marker information is pixel values of the objects of the respective bus stop signs 200 and 210, the marker level determination 123 of the terminal device determines marker levels of the pixel values of the objects of the respective bus stop signs 200 and 210. In this case, since a pixel value of the object of the bus stop sign 200 is smaller than a pixel value of the object of the bus stop sign 210, the marker level of the object of the bus stop sign 200 is determined to be smaller than the marker level of the object of the bus stop sign 210. If the marker levels of the objects of the respective bus stop signs 200 and 210 are determined, the terminal device requests the object server to send property information corresponding to the determined marker levels. Then, the terminal device receives the property information corresponding to the marker levels of the objects of the respective bus stop signs 200 and 210, and combines the objects and the pieces of received property information to display a combined result via the display unit 140.

As shown in the example, in case of the object of the bus stop sign 200, the terminal device only displays property information 230 of "Sinchon Bus Stop" since the marker level of the object of the bus stop sign 200 is smaller than a predefined amount. In contrast, in the case of the object of the bus stop sign 210, the terminal device displays property information 220 including a name of the bus stop "Yonsei Univ. Bus Stop" and arrival time of each bus "770: arrive in 5 min," and "730: arrive in 2 min" since the marker level of the object of the bus stop sign 210 is larger than a threshold. In other words, the terminal device displays simplified or less detailed property information of the object of the bus stop sign 200 since the object of the bus stop sign 200 is farther away from the terminal device than bus stop sign 210, and displays detailed property information of the object of the bus stop sign 210 since the object of the bus stop sign 210 is closer to the terminal device than bus stop sign 200. Thus, the amount of a marker information/pixel value of an object of interest, such as a bus stop sign, determines a marker level, which ultimately determines the amount of information provided in an AR display incorporating the object.

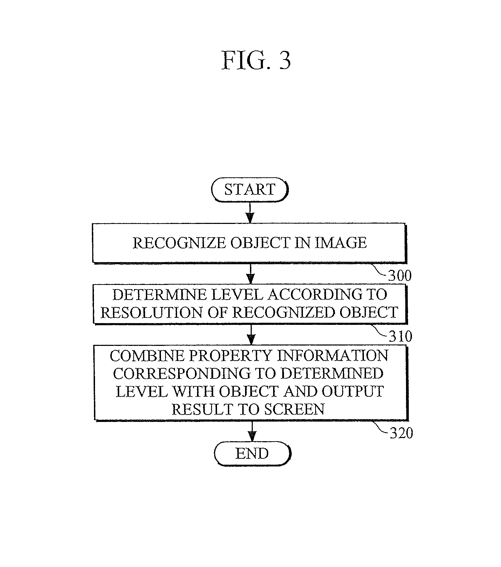

FIG. 3 is a diagram illustrating a flowchart of an example of displaying information based on levels according to an exemplary embodiment of the present invention.

As shown in the example illustrated in FIG. 3, if a camera of a terminal device captures an object in different degrees of detail based on factors such as the environment and location, and captures an image of a real environment in response to a user's request, an object in the captured image is recognized in operation 300. However, aspects are not limited there to such that the captured image need not be captured by the cameral or the terminal and may be received and/or stored by the terminal from another source. Further, capturing of an object and /or an image need not be in response to user's request. In response to recognizing the object in the captured image, the terminal device determines a level according to a pixel value of the recognized object in operation 310. Once the level is determined according to the pixel value of the recognized object, or another factor, the terminal device receives property information corresponding to the determined level of the object from an object server, the object server storing images of a plurality of objects and property information corresponding to levels of each object, and the received property information is output to a display in operation 320. Thus, as shown in Fig. 2, if an object contains more pixels than another object with less pixels, more information from an object server may be displayed.

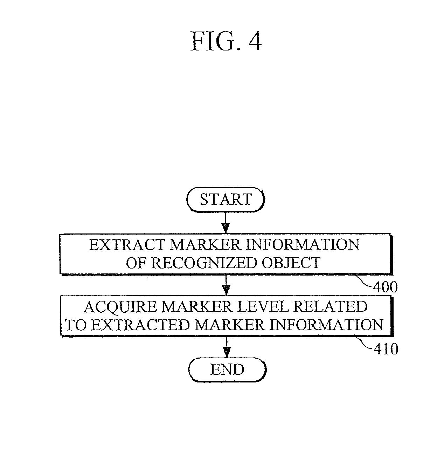

FIG. 4 is a flowchart showing an operation of display of AR according to an exemplary embodiment of the present invention.

As shown in the example illustrated in FIG. 4, if an object is recognized from an image captured by a camera of the terminal device, the terminal device extracts marker information of the recognized object at 400. In this case, the marker information is a pixel value according to the width and height of the recognized object, and the terminal device extracts marker information related to a pixel value according to the width and height of the recognized object. In response to extracting the marker information of the recognized object, the terminal device acquires a marker level related to the extracted marker information with respect to a marker information DB that stores marker levels of each piece of marker information according to a pixel value of an object at 410. That is, the terminal device determines the marker level using the marker information related to the pixel value according to the width and height of the recognized object with reference to the marker information DB storing marker levels of each piece of marker information. Here, the marker level is a value for determining a degree or amount and detail of property information related to an object to be displayed. For example, as shown in FIG. 2, if an image of a real environment is captured by the camera of the terminal device and the objects of the bus stop signs 200 and 210 are recognized from the captured image, the terminal device extracts marker information related to the pixel values according to the width and height of each of the bus stop signs 200 and 210. In the case of the object of the bus stop sign 200, the object is farther than the object of the bus stop sign 210 from the terminal device, causing the object to appear smaller, and thus the number of the pixel value of the object of the bus stop sign 200 is smaller than the pixel value of the object of the bus stop sign 210. For this reason, the marker level of the object of the bus stop sign 200 is determined to be smaller than the marker level of the object or the bus stop sign 210. Accordingly, the terminal device receives simple property information, "Sinchon Bus Stop" 230 from the object server according to the marker level determined based on the marker information of the object of the bus stop sign 200. Meanwhile, the terminal device receives detailed property information including a name of the bus stop, "Yonsei Univ. Bus Stop," 220 and arrival time of each bus "770: Arrive in 5 min., 730: Arrive in 2 min." according to marker level determined based on the marker information of the object of the bus stop sign 210 (i.e. being closer, and thus containing more pixels). The terminal device combines the simple property information "Sinchon Bus Stop" 230 with the object of the bus stop sign 200 and displays the combined result, and combines the detailed property information "Yonsei Univ. Bus Stop, 770: Arrive in 5 min., 730: Arrive in 2 min." 220 with the object of the bus stop sign 210 and displays the combined. Thus, as shown in Fig. 2, the property information of the object can be provided and shown in different degrees of detail according to the pixel value of the object at which the picture was captured.

In another example, the terminal device may use a ratio between the width and height of a recognized object to combine the object and the property information, of which exposure range is determined, in a manner so that AR can be rotated three-dimensionally.

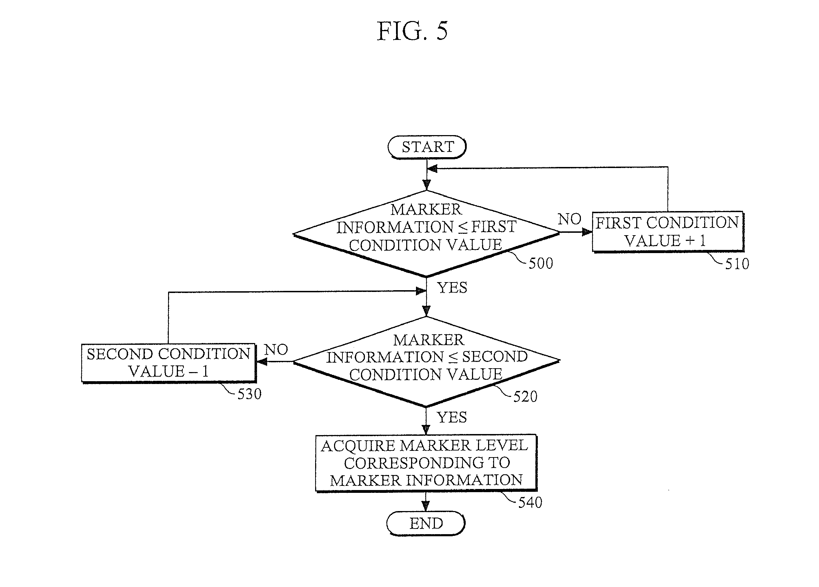

FIG. 5 is a flowchart illustrating determining a marker level according to an exemplary embodiment of the present invention.

As shown in the example illustrated in FIG. 5, the terminal device checks whether marker information of the recognized object is included in predefined condition values. If the marker information is included in the predefined condition values, a marker level corresponding to the marker information is determined, otherwise, the terminal device updates a marker level corresponding to the marker information of the recognized object. More specifically, the terminal device compares the marker information of the recognized object with a predefined first condition value in operation 500. If the marker information of the recognized object is greater than the first condition value, the terminal device adds a value to the first condition value in operation 510. That is, the terminal device raises the first condition value by a first incremental value, until the marker information of the recognized object becomes smaller than or equal to the first condition value. For example as shown in Fig. 5, a first incremental value of 1 is used; however other first incremental values may also be used to increase the first condition value. If the comparison result determines that the marker information of the recognized object is smaller than or equal to the first condition value in operation 500, the terminal device compares the marker information of the recognized object with a predefined second condition value at 520. If the comparison result shows that the marker information of the recognized object is greater than the second condition value, the terminal device reduces the second condition value by a second incremental value in operation 530. Then, if the comparison result shows that the marker information of the recognized object is smaller than or equal to the second condition value in operation 520, the terminal device acquires a marker level corresponding to the marker information of the recognized object with reference to a marker information DB in operation 530. For example, as shown in Fig. 5, a second incremental value 1 is used; however other second incremental values may also be used to decrease the second condition value. Thus, by using a first and second predefined condition, it may be possible to determine the proper marker level corresponding to a recognized object.

The pixel value of an object recognized from an image of a real environment captured by the camera of the terminal device varies depending on the movement of the user. As described above, as a recognized object is closer to the terminal device, the pixel value of the recognized object increases, and thus the marker information of the recognized object is changed compared to an initial value, or a previously captured image. Thus, a marker level determined based on the marker information of the initially recognized object is updated, so that detailed property information of the recognized object can be displayed, with the displayed property information being more detailed than the initially displayed property information.

In an example, as the recognized object becomes more distant from the terminal device, the pixel value of the object is reduced, and thus the marker information of the initially recognized object is changed. Accordingly, a marker level determined according to the marker information of the initially recognized object is updated, so that simpler property information can be displayed, compared to the initially displayed property information.

As described above, the terminal device displays property information of a recognized object in different details according to a pixel value of the object to be displayed, thereby providing information to a user more effectively and increasing the efficiency and relevance of information provided to a user.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

A terminal device and method for augmented reality (AR) is disclosed herein. The terminal device including: a communication unit to communicate with an object server, the object server storing images of a plurality of objects and property information corresponding to levels of each object; an object recognition unit to recognize an object contained in the image; and a control unit to receive property information from the object server corresponding to a pixel value of the recognized object from and to combine the received property information and the recognized object.

## Claims

1. A terminal device to provide an augmented reality (AR) of an image, the terminal device comprising:
a communication unit to communicate with an object server, the object server storing images of a plurality of objects and property information corresponding to levels of each object;
an object recognition unit to recognize an object contained in the image; and
a control unit to receive property information the object server corresponding to a pixel value of the recognized, object from and to combine the received property information and the recognized object.

2. The terminal device of claim 1, further comprising:
a marker information database (DB) to store marker levels of marker information according to a resolution of an object,
wherein the control unit comprises:
a marker information extraction unit configured to extract marker information of the recognized object,
a level determination unit to determine a marker level corresponding to the marker information extracted by the marker information extraction unit with reference to the marker information DB, and
an object information process unit to receive property information corresponding to the determined marker level and to combine the received property information and the recognized object.

3. The terminal device of claim 2, wherein the marker level determination unit further comprises:
a marker information check unit to check whether the extracted marker information is included in specific condition values, and
marker level acquisition unit to acquire a marker level related to the extracted marker information with reference to the marker information DB.

4. The terminal device of claim 2 or 3, wherein the marker information extraction unit extracts marker information related to a pixel value according to a width and height of the recognized object.

5. The terminal device of one of claims 2 to 4, wherein the object information unit processes the recognized object and related property information using a ratio between the width and height of the recognized object, wherein preferably the recoginized object and the property information are output rotatably and three-dimensionally.

6. The terminal device of one of claims 2 to 5, wherein the marker level acquisition unit acquires a marker level if the check result indicates that the extracted marker information is included in the predefined condition values.

7. The terminal device of claim 6, wherein the marker level acquisition unit updates the marker level related to the extracted marker information, if the check result indicates that the extracted marker information is not included in the condition values.

8. A method of displaying property information of an object of an inputted image, the method comprising:
recognizing the object in the inputted image;
determining a level according to a pixel value of the recognized object;
receiving property information corresponding to the determined level from an object server;
combining the received property information and the recognized object; and
displaying the combined result.

9. The method of claim 8, wherein the determining of the level comprises extracting marker information of the recognized object; and
acquiring a marker level related to the extracted marker information from a marker information database.

10. The method of claim 9, wherein the determining of the marker level comprises determining the marker level based on marker information related to a pixel value according to the width and height of the recognized object.

11. The method of claim 10, wherein the determining of the marker level comprises checking whether the marker information of the recognized object is included in specific condition values; and
acquiring the marker level corresponding to the marker information.

12. The method of one of claims 9 to 11, wherein the acquiring of the marker level occurs if the recognized marker information is included in the condition values.

13. The method of claim 12, wherein the method comprises:
if the recognized marker information is not included in the condition values, updating the marker level corresponding to the marker information.

14. The method of one of claims 8 to 13, wherein the combining of the property information and the recognized object comprises:
combining the recognized object and the property information using a ratio between the width and height of the recognized object,
the method preferably further comprising outputting the recognized object and the property information rotatably and three-dimensionally.

15. A terminal device, comprising:
a determination unit to determine a location of an object based on an amount of pixels corresponding to the object as represented in a captured image;
communication unit to communicate with a server and receive information corresponding to the location of the object; and
a display unit to display the information along with the first object.
